# EUROPÄISCHE PATENTANMELDUNG

(11) **EP 4 494 842 A1**
(43) Veröffentlichungstag der Anmeldung: **22.01.2025**
(21) Anmeldenummer: 24188868.4
(22) Anmeldetag: 16.07.2024
(51) Int. Cl.: B29C 49/78, B29C 49/06, B29C 49/02, B29K 67/00, B29L 31/00

(54) **BEHÄLTERBEHANDLUNGSANLAGE UND VERFAHREN ZUM HERSTELLEN UND BEHANDELN EINES VORFORMLINGS**

(30) Priorität: 19.07.2023 DE 102023119036
(71) Anmelder: Krones AG, 93073 Neutraubling (DE)
(72) Erfinder: Geltinger, Florian, 93073 Neutraubling (DE); Wuensche, Dieter, 93073 Neutraubling (DE); Aust, Robert, 93073 Neutraubling (DE); Forsthoevel, Jochen, 93073 Neutraubling (DE)
(74) Vertreter: Grünecker Patent- und Rechtsanwälte PartG mbB

(57) **Zusammenfassung**

Behälterbehandlungsanlage umfassend eine Herstellungsmaschine zum Herstellen eines Vorformlings, insbesondere eine Spritzgussmaschine, wenigstens eine in einer Transportrichtung des Vorformlings stromab der Herstellungsmaschine angeordnete Behälterbehandlungsmaschine und eine Steuereinheit, wobei die Herstellungsmaschine und die wenigstens eine Behälterbehandlungsmaschine miteinander verblockt sind, wobei die Steuereinheit ausgebildet ist, einen ersten Betrieb der Herstellungsmaschine und einen zweiten Betrieb der wenigstens einen Behälterbehandlungsmaschine miteinander zu synchronisieren.

## Beschreibung

Die vorliegende Erfindung betrifft eine Behälterbehandlungsanlage zum Herstellen und Behandeln eines Vorformlings gemäß unabhängigem Anspruch 1 und ein entsprechendes Verfahren gemäß unabhängigem Anspruch 9.

### Stand der Technik

Behälterbehandlungsanlagen sind aus dem Stand der Technik hinreichend bekannt. Zur Herstellung von Behältern umfassen Behälterbehandlungsanlagen typischerweise eine Blasformmaschine, mittels welcher Vorformlinge zu Behältern ausgeformt werden können. Zur Herstellung der Vorformlinge haben sich wiederum Spritzgussverfahren etabliert.

Bis jetzt wird die Herstellung der Vorformlinge mittels Spritzgussverfahren und das Ausformen der Vorformlinge mittels des Blasformverfahrens zu Behältern zeitlich und örtlich getrennt voneinander durchgeführt. Behälterbehandlungsmaschinen aus dem Stand der Technik umfassen deswegen typischerweise eine Speichereinheit, in welcher die bereits fertig hergestellten Vorformlinge als Schüttgut gelagert werden und der Blasformmaschine je nach Bedarf zur Verfügung gestellt werden können. Die in der Speichereinheit gelagerten Vorformlinge werden hierfür zunächst einer Sortiervorrichtung zugeführt, in welcher sie vereinzelt werden, um anschließend der Blasformmaschine in geordneter Form zugeführt werden zu können. Die Vorformlinge können dann durch die Blasformmaschine zu Behältern ausgeformt werden. In nachgeordneten Prozessen können in der Behälterbehandlungsanlage weitere Behandlungsschritte an den Behältern vorgenommen werden, wie beispielsweise eine Beschichtung, eine Etikettierung, ein Bedrucken, ein Befüllen und/oder ein Verschließen der Behälter.

Die zeitlich und örtlich getrennte Herstellung und Weiterverarbeitung der Vorformlinge zu Behältern und der damit einhergehende Transport der Vorformlinge zur Behälterbehandlungsmaschine und die Lagerung der Vorformlinge als Schüttgut bringt jedoch eine Reihe von Nachteilen mit sich. So können durch die Lagerung und den Transport Beschädigungen der Vorformlinge sowie zusätzliche Kosten hervorgerufen werden. Auch können ungewünschte Verunreinigung der Vorformlinge aufgrund teilweise langer Lagerzeiten oder aufgrund des Transports nicht ausgeschlossen werden.

### Aufgabe

Ausgehend vom Stand der Technik liegt die zu lösende Aufgabe darin, den Betrieb einer Behälterbehandlungsanlage effizienter zu gestalten und gleichzeitig die Qualität der hergestellten Behälter zu erhöhen.

### Lösung

Diese Aufgabe wird erfindungsgemäß durch die Behälterbehandlungsanlage gemäß unabhängigem Anspruch 1 und das entsprechende Verfahren nach unabhängigem Anspruch 9 gelöst. Bevorzugte Weiterbildungen der Erfindung sind in den abhängigen Ansprüchen erfasst.

Die erfindungsgemäße Behälterbehandlungsanlage umfasst eine Herstellungsmaschine, insbesondere eine Spritzgussmaschine, zum Herstellen eines Vorformlings, wenigstens eine in einer Transportrichtung des Vorformlings stromab der Herstellungsmaschine angeordnete Behälterbehandlungsmaschine und eine Steuereinheit, wobei die Herstellungsmaschine und die wenigstens eine Behälterbehandlungsmaschine miteinander verblockt sind und die Steuereinheit ausgebildet ist, einen ersten Betrieb der Herstellungsmaschine und einen zweiten Betrieb der wenigstens einen Behälterbehandlungsmaschine miteinander zu synchronisieren.

Bei der Herstellungsmaschine kann es sich insbesondere um eine Spritzgussmaschine handeln. Alternativ kann es sich auch um eine Vorrichtung zur Herstellung von Vorformlingen mittels eines Compression Moulding Verfahrens oder um eine Vorrichtung zum Herstellen von Vorformlingen mittels eines Injection Compression Moulding Verfahrens handeln. Es kann sich jedoch auch um jede andere Vorrichtung handeln, welche zum Herstellen eines Vorformlings geeignet ist.

Bei der Behälterbehandlungsmaschine kann es sich um jede beliebige Art von Behälterbehandlungsmaschine handeln, welche zur Herstellung eines Behälters aus einem Vorformling und/oder zur Behandlung eines aus dem Vorformling hergestellten Behälters geeignet ist. So kann es sich bei der Behälterbehandlungsmaschine beispielsweise um eine Blasformmaschine, welche beispielsweise als Streckblasformmaschine oder als Extrusionsblasformmaschine ausgestaltet sein kann, und/oder um eine Heizvorrichtung, welche beispielsweise als Infrarot-Heizvorrichtung oder Mikrowellen-Heizvorrichtung ausgeführt sein kann, handeln. Zwischen der Herstellungsmaschine und der Heizvorrichtung kann optional eine thermische Pufferstrecke vorgesehen sein. Es kann sich bei der Behälterbehandlungsmaschine jedoch beispielsweise auch um eine zur Vorbehandlung eines Behälters ausgestaltete Behälterbehandlungsmaschine, beispielsweise mittels eines Flammenpyrolyse- Plasma- oder Coronaverfahrens, eine Etikettiermaschine, eine Direktdruckvorrichtung, einen Füller und/oder einen Verschließer handeln. Insbesondere können auch mehrere Behälterbehandlungsmaschinen in Reihe stromab der Herstellungsmaschine in Transportrichtung des Vorformlings angeordnet sein. Hierbei kann jede mögliche Kombination der eben genannten und auch jeder anderen Behälterbehandlungsmaschine vorgesehen sein.

Mit der Behälterbehandlungsmaschine können Behälter verschiedenster Art aus den Vorformlingen hergestellt und behandelt werden, wobei es sich bei den Behältern vorzugsweise um in der Getränkeindustrie verwendete Flasche handelt. Es kann jedoch auch jede andere Art von Behälter aus den Vorformlingen hergestellt werden, wie beispielsweise Dosen, Gläser, Becher oder Tuben, wie sie beispielsweise in der Getränke-, Pharma-, Gesundheits- oder Lebensmittelindustrie zum Einsatz kommen, oder jeder andere Behälter, welcher zum Aufnehmen eines beliebigen flüssigen oder pastösen Mediums geeignet sein kann.

Unter einer Verblockung der Herstellungsmaschine und der wenigstens einen Behälterbehandlungsmaschine ist zu verstehen, dass die Herstellungsmaschine und die wenigstens eine Behälterbehandlungsmaschine eine Einheit bilden. Somit können die Vorformlinge in der gleichen Anlage hergestellt werden, in welcher sie auch weiter zu Behältern verarbeitet werden. Optional kann es beispielsweise vorgesehen sein, dass die Herstellungsmaschine und die Behälterbehandlungsmaschine mittels einer Transportvorrichtung, wie beispielsweise einem Transportband oder einem Drehstern, miteinander in Verbindung stehen, so dass die mittels der Herstellungsmaschine hergestellten Vorformlinge direkt und in geordneter Form zu der wenigstens einen Behälterbehandlungsmaschine weiter transportiert werden können. Die Transportvorrichtung kann steril ausgeführt sein, so dass eine Kontamination der Behälter während dem Transport von der Herstellungsmaschine zu der wenigstens einen Behälterbehandlungsmaschine vermieden werden kann.

Bei dem ersten Betrieb kann es sich insbesondere um eine Anzahl von Vorformlingen handeln, welche pro Zeitintervall, beispielsweise pro Stunde, mittels der Herstellungsmaschine hergestellt werden kann oder um eine Anzahl von Vorformlingen, welche pro Zeitintervall, beispielsweise pro Stunde, an die in Transportrichtung stromab angeordnete Behälterbehandlungsmaschine ausgebracht werden kann. Die Anzahl der Vorformlinge, welche durch die Herstellungsmaschine pro Zeitintervall hergestellt werden können und die Anzahl der Vorformlinge, welche pro Zeitintervall ausgebracht werden kann, kann beispielsweise verschieden sein, wenn die Herstellungsmaschine eine optionale Inspektion der Vorformlinge vornimmt und ausgebildet ist, fehlerhafte Vorformlinge auszuführen, so dass nur fehlerfreie Vorformlinge an die wenigstens eine Behälterbehandlungsmaschine ausgegeben werden. Alternativ kann es sich bei dem ersten Betrieb beispielsweise auch um einen Abstand handeln, mit welchem die Vorformlinge durch die Herstellungsmaschine ausgegeben werden. Der erste Betrieb kann beispielsweise mittels eines ersten Betriebsparameters der Herstellungsmaschine, wie beispielsweise einer Zyklus- oder eine Einspritzdauer, geregelt werden.

Bei dem ersten Betrieb kann es sich jedoch auch um einen Betrieb der Herstellungsmaschine handeln, welcher nicht in direktem Zusammenhang mit der pro Zeitintervall durch die Herstellungsmaschine hergestellten Vorformlinge steht. In diesem Fall kann es sich bei dem ersten Betriebsparameter auch um einen Betriebsparameter handeln, welcher eine beliebige Komponente der Herstellungsmaschine parametrisieren kann und den Vorformlingsdurchsatz durch die Herstellungsmaschine nicht direkt beeinflusst. Beispielsweise kann es sich bei dem ersten Betriebsparameter in diesem Fall um eine Werkzeugtemperatur eines Herstellungswerkzeugs der Herstellungsmaschine handeln. Der erste Betriebsparameter kann auch einen Verschleißzustand der Herstellungsmaschine und/oder einer Komponente der Herstellungsmaschine angeben.

Weiterhin kann es sich bei dem ersten Betriebsparameter auch um einen materialspezifischen Parameter eines durch die Herstellungsmaschine verarbeiteten Materials, wie beispielsweise eines Granulats oder einer Schmelze, oder eines durch die Herstellungsmaschine hergestellten Vorformlings handeln. Bei dem materialspezifischen Parameter kann es sich beispielsweise um eine Vorformlingstemperatur, einen Infrarot-Kennwert des Vorformlings, einen intrinsischen Viskositätswert des Vorformlings, eine Farbe des Vorformlings oder jede andere Materialeigenschaft des durch die Herstellungsmaschine hergestellten Vorformlings handeln. Die materialspezifischen Parameter können beispielsweise durch wenigstens eine Sensoreinrichtung, welche der Herstellungsmaschine zugeordnet sein oder von der Herstellungsmaschine umfasst sein kann, messtechnisch erfasst werden.

Der erste Betrieb kann beispielsweise durch wenigstens einen ersten Betriebsparameter beschrieben sein. Es kann dabei vorgesehen sein, dass der erste Betrieb eine Vielzahl von ersten Betriebsparametern der Herstellungsmaschine umfassen kann, welche zum Teil mit der Anzahl der von Herstellungsmaschine pro Zeitintervall hergestellten Vorformlinge in Verbindung stehen können und zum Teil auch nicht mit der Anzahl der pro Zeitintervall hergestellten Vorformlinge in Verbindung stehen können.

Bei dem zweiten Betrieb kann es sich insbesondere um einen mittels der Behälterbehandlungsmaschine erzielbaren Durchsatz an Vorformlingen beziehungsweise Behältern pro Zeitintervall, beispielsweise pro Stunde, oder eine Anzahl von Behälter, welche pro Zeitintervall durch die Behälterbehandlungsmaschine durchgesetzt oder ausgebracht werden kann handeln. Der zweite Betrieb kann beispielsweise mittels eines zweiten Betriebsparameters der Behälterbehandlungsmaschine geregelt werden.

Bei dem zweiten Betrieb kann es sich jedoch auch um einen Betrieb der wenigstens einen Behälterbehandlungsmaschine handeln, welcher nicht in direktem Zusammenhang mit dem durch die wenigstens einen Behälterbehandlungsmaschine erzielbaren Durchsatz an Vorformlingen beziehungsweise Behältern steht. Beispielsweise kann es sich bei dem zweiten Betrieb auch um eine Parametrisierung eines durch die wenigstens eine Behälterbehandlungsmaschine an den Vorformlingen oder Behältern durchgeführten Behandlungsschrittes handeln, welcher zu einer Veränderung einer Materialeigenschaft des Vorformlings oder des Behälters führt, jedoch nicht zwangsläufig Einfluss auf den durch die Behälterbehandlungsmaschine erzielbaren Behälterdurchsatz nehmen muss. Handelt es sich bei der Behälterbehandlungsmaschine um eine Blasformmaschine kann es sich bei dem zweiten Betriebsparameter beispielsweise um ein Heizprofil der Blasformmaschine handeln.

Entsprechend dem ersten Betrieb kann auch der zweite Betrieb durch wenigstens einen zweiten Betriebsparameter beschrieben sein. Es kann dabei beispielsweise vorgesehen sein, dass der zweite Betrieb eine Vielzahl von zweiten Betriebsparametern der wenigstens einen Behälterbehandlungsmaschine umfassen kann, welche zum Teil mit der Anzahl der von Behälterbehandlungsmaschine pro Zeitintervall behandelten Vorformlinge in Verbindung stehen können und zum Teil auch nicht mit der Anzahl der pro Zeitintervall behandelten Vorformlinge in Verbindung stehen können.

Unter einem Synchronisieren des ersten und zweiten Betriebs kann im Allgemeinen verstanden werden, dass der erste Betrieb und der zweite Betrieb aufeinander abgestimmt werden. Beispielsweise kann ein erster Betriebsparameter der Herstellungsmaschine und ein zweiter Betriebsparameter der wenigstens einen Behälterbehandlungsmaschine aufeinander abgestimmt werden. Hierunter kann beispielsweise verstanden werden, dass der erste Betriebsparameter basierend auf dem zweiten Betriebsparameter oder der zweite Betriebsparameter basierend auf dem ersten zweiten Betriebsparameter geregelt wird.

Beispielsweise kann unter einem Synchronisieren des ersten und des zweiten Betriebs verstanden werden, dass der erste Betrieb der Herstellungsmaschine und der zweite Betrieb der Behälterbehandlungsmaschine aufeinander abgestimmt sind, so dass die durch die Herstellungsmaschine hergestellten Vorformlinge beispielsweise nicht zwischengespeichert werden müssen und direkt mittels der stromab in Transportrichtung angeordneten wenigstens einen Behälterbehandlungsmaschine weiterverarbeitet werden können, insbesondere also der Durchsatz (auch Ausbringleistung) der Herstellungsmaschine und der Behälterbehandlungsmaschine gleich sind. Eine Synchronisierung des ersten und zweiten Betriebs kann beispielsweise bei einem Start der Herstellungsmaschine und/oder der wenigstens einen Behälterbehandlungsmaschine durch die Steuereinheit vorgenommen werden. Alternativ kann auch während des Betriebs ein Synchronisieren des ersten und zweiten Betriebs stattfinden, beispielsweise in festgelegten Zeitintervallen.

Weiterhin kann es beispielsweise unter einem Synchronisieren auch verstanden werden, dass der zweite Betrieb, wie beispielsweise ein Heizprofil einer Blasformmaschine, auch basierend auf einem materialspezifischen Parameter, wie beispielsweise einer Vorformlingstemperatur oder einem Infrarot-Kennwert, eines durch die Herstellungsmaschine hergestellten Vorformlings geregelt wird.

Durch die erfindungsgemäße Behälterbehandlungsanlagenlage können somit Vorformlinge in ein und derselben Anlage hergestellt und zu Behältern weiterverarbeitet werden, wobei durch die Synchronisierung des ersten und zweiten Betriebs ein möglichst effizienter Betrieb der Behälterbehandlungsanlage sowie eine Verbesserung der Qualität der hergestellten Vorformlinge ermöglicht wird. Hierdurch kann insbesondere eine durch die Lagerung und/oder den Transport hervorgerufene Beschädigung der Vorformlinge, welche typischerweise bei extern hergestellten Vorformlingen oder bei der Zwischenspeicherung der Vorformlinge auftreten kann, verhindert werden sowie Lager und Transportkosten gespart werden. Des Weiteren kann eine Transport- oder Lagerungsbedingte Verunreinigung der Vorformlinge verhindert werden. Folglich kann durch die Verblockung von Herstellungsmaschine und wenigstens einer Behälterbehandlungsmaschine sowie der Synchronisierung des ersten und zweiten Betriebs, die Qualität der aus den Vorformlingen hergestellten Behältern erhöht werden und der Herstellungs- beziehungsweise Behandlungsprozess effizienter gestaltet werden.

In einer Ausführungsform kann der erste Betrieb eine Ausbringleistung der Herstellungsmaschine, einen ersten Betriebsparameter der Herstellungsmaschine, welcher Einfluss auf eine Eigenschaft eines durch die Herstellungsmaschine hergestellten Vorformlings nehmen kann und/oder eine Eigenschaft eines durch die Herstellungsmaschine hergestellten Vorformlings umfassen und der zweite Betrieb eine Durchsatzleistung der wenigstens einen Behälterbehandlungsmaschine und/oder einen zweiten Betriebsparameter der wenigstens einen Behälterbehandlungsmaschine, welcher Einfluss auf eine Eigenschaft eines durch die wenigstens eine Behälterbehandlungsmaschine behandelten Vorformlings und/oder Behälters nehmen kann umfassen. Unter der Ausbringleistung beziehungsweise Durchsatzleistung ist die Anzahl von Vorformlingen/Behältern zu verstehen, welche pro Zeitintervall, beispielsweise pro Stunde, durch die Herstellungsmaschine beziehungsweise die wenigstens eine Behälterbehandlungsmaschine ausgegeben beziehungsweise verarbeitet werden können. Unter der Eigenschaft des durch die Herstellungsmaschine hergestellten Vorformlings kann beispielsweise ein materialspezifischer Parameter des Vorformlings, wie beispielsweise eine Vorformlingstemperatur, ein Infrarot-Kennwert eines Vorformlings, eine intrinsische Viskosität eines Vorformlings, eine Farbe eines Vorformlings oder jede andere Materialeigenschaft des Vorformlings verstanden werden. Entsprechendes gilt für die Eigenschaft des behandelten Vorformlings und/oder Behälters, welche zusätzlich beispielsweise auch eine Wandstärkenverteilung sein kann. Die Ausbringleistung und die Durchsatzleistung sind einfach zu bestimmen und flexibel zu regeln und können somit auf einfache Weise durch die Steuereinrichtung synchronisiert werden.

In einer weiteren Ausführungsform kann die Steuereinheit ausgebildet sein, den zweiten Betrieb der wenigstens einen Behälterbehandlungsmaschine basierend auf dem ersten Betrieb der Herstellungsmaschine zu regeln. Diese kann insbesondere dann vorgesehen sein, wenn der zweite Betrieb der wenigstens einen Behälterbehandlungsmaschine im Vergleich zu dem ersten Betrieb der Herstellungsmaschine einfacher zu steuern beziehungsweise zu regeln ist oder die Herstellungsmaschine als eine Leitmaschine der Behälterbehandlungsanlage dienen soll.

In einer Weiterbildung der vorhergehenden Ausführungsform kann die Steuereinheit ausgebildet sein, den ersten Betrieb basierend auf einer Zykluszeit, einer Anzahl von Kavitäten eines Herstellungswerkzeugs der Herstellungsmaschine, einer Vorformlingstemperatur, einem Infrarot-Kennwert eines Vorformlings, einer intrinsischen Viskosität eines Vorformlings und/oder einer Farbe eines Vorformlings zu bestimmen. Unter der Zykluszeit ist dabei die Zeit zu verstehen, welche benötigt wird, um einen Vorformling mit der Herstellungsmaschine herzustellen. Unter einer Kavität ist wiederum ein Hohlraum eines Herstellungswerkzeugs der Herstellungsmaschine zu verstehen, in welchen das flüssige Material, beispielsweise flüssiger Kunststoff, zur Herstellung des Vorformlings eingespritzt wird, wobei die Form des Hohlraums die Form des fertig hergestellten Vorformlings bestimmt. Die Zykluszeit und die Anzahl der Kavitäten stehen direkt mit der Ausbringleistung der Herstellungsmaschine in Verbindung und stellen somit geeignete Größen zur Bestimmung der Ausbringleistung dar.

In einer Ausführungsform kann die Herstellungsmaschine eine Inspektionsmaschine zum Erkennen und zum Aussortieren fehlerhafter Vorformlinge umfassen und die Steuereinheit ausgebildet sein, den ersten oder den zweiten Betrieb basierend auf einer Anzahl aussortierter Vorformlinge anzupassen. Somit kann der synchrone Betrieb zwischen Herstellungsmaschine und Behälterbehandlungsmaschine auch sichergestellt werden, wenn sich der erste Betrieb, beziehungsweise die Ausbringleistung (als Anzahl von Vorformlingen, die an die nachfolgende Behälterbehandlungsmaschine pro Zeiteinheit übergeben werden), der Herstellungsmaschine aufgrund der Aussortierung fehlerhafter Vorformlinge mit der Zeit verändert obwohl die Anzahl mit der Herstellungsmaschine hergestellter Behälter pro Zeiteinheit konstant bleibt.

In einer Ausführungsform kann die Steuereinheit ausgebildet sein, den ersten Betrieb der Herstellungsmaschine basierend auf dem zweiten Betrieb der wenigstens einen Behälterbehandlungsmaschine zu regeln. Dies kann dann vorgesehen sein, wenn der erste Betrieb der Herstellungsmaschine einfacher gesteuert werden kann als der zweite Betrieb der wenigstens einen Behälterbehandlungsmaschine oder die wenigstens eine Behälterbehandlungsmaschine als Leitmaschine der Behälterbehandlungsmaschine dienen soll.

In einer Weiterbildung dieser Ausführungsform kann die wenigstens eine Behälterbehandlungsmaschine eine Transportkomponente umfassen und die Steuereinheit ausgebildet sein, den zweiten Betrieb basierend auf einer Aufnahmekapazität der Transportkomponente und/oder einer durch die Transportkomponente erzielbare Behälterdurchsatzleistung zu bestimmen. Die Aufnahmekapazität der Transportkomponente und/oder die Behälterdurchsatzleistung der Transportkomponente stehen in direkter Verbindung mit dem zweiten Betrieb, beziehungsweise der Durchsatzleistung, der wenigstens eine Behälterbehandlungsmaschine und sind somit geeignete Grö-ßen zur Bestimmung des zweiten Betriebs.

In einer Weiterbildung einer der beiden vorhergehenden Ausführungsformen, kann das Regeln des ersten Betriebs der Herstellungsmaschine das Regeln von wenigstens einem von einer Zykluszeit, einer Lock to Lock Zeit, einer Einspritzdauer, eines Trocknungsparameters, einer Herstellungswerkzeugtemperatur, einer Anzahl der Herstellungsmaschine zugeordneten Nachkühleinheiten und/oder einer Nachkühldauer umfassen. Die Einspritzdauer beschreibt die Zeitdauer für welche ein Material, beispielsweise flüssiger Kunststoff, in eine Kavität des Herstellungswerkzeugs eingebracht wird und die Herstellungswerkzeugtemperatur eine Temperatur des Herstellungswerkzeugs, bevor das Material in die Kavität des Herstellungswerkzeugs eingebracht wird. Die Nachkühleinheiten können beispielsweise als Gebläse ausgestaltet sein und vorgesehen sein, den Vorformling auf eine bestimmte Soll-Temperatur abzukühlen, während die Nachkühldauer die Zeitdauer beschreibt, für welche der Vorformling durch die Nachkühleinheiten abgekühlt wird. Unter Lock to Lock Zeit ist die Zeit zu verstehen, welche das Herstellungswerkzeug zum Öffnen und Schließen benötigt. In dieser Zeit kann keine Herstellung von Vorformlingen in der Herstellungsmaschine stattfinden, so dass die Lock to Lock Zeit einer Totzeit gleichgesetzt werden kann. Unter Trocknungsparameter kann ein Betriebsparameter der Herstellungsmaschine verstanden werden, welcher Einfluss auf den Trocknungsvorgang des hergestellten Vorformlings nimmt. Da die eben beschriebenen Größen in direkter Verbindung zu dem ersten Betrieb der Herstellungsmaschine stehen, sind diese geeignet den ersten Betrieb der Herstellungsmaschine zu regeln.

Außerdem ist erfindungsgemäß ein Verfahren zum Steuern eines Betriebs einer Behälterbehandlungsanlage vorgesehen, wobei die Behälterbehandlungsanlage eine Herstellungsmaschine zum Herstellen eines Vorformlings, insbesondere eine Spritzgussmaschine, wenigstens eine in einer Transportrichtung des Vorformlings stromab der Herstellungsmaschine angeordnete Behälterbehandlungsmaschine und eine Steuereinheit umfasst, wobei die Herstellungsmaschine und die wenigstens eine Behälterbehandlungsmaschine miteinander verblockt sind und wobei mittels der Steuereinheit ein erster Betrieb der Herstellungsmaschine und ein zweiter Betrieb der wenigstens einen Behälterbehandlungsmaschine miteinander synchronisiert wird.

Durch das erfindungsgemäße Verfahren können die Vorformlinge somit in derselben Anlage hergestellt und zu Behältern weiter verarbeitet werden. Durch den synchronen Betrieb der Herstellungsmaschine kann außerdem eine Zwischenspeicherung der Vorformlinge, bevor dieses der wenigstens einen Behälterbehandlungsmaschine zugeführt werden, vermieden werden. Somit können insbesondere Lager- und Transportkosten sowie Beschädigungen, wie sie entweder beim Lagern, beim Transport oder bei der Zwischenspeicherung in der Behälterbehandlungsanlage hervorgerufen werden können, verhindert werden und die Qualität der aus den Vorformlingen erzeugten Behälter erhöht werden. Zudem kann durch das erfindungsgemäße Verfahren Energie gespart werden, da die nach dem Herstellungsprozess vorhandene Restwärme der Vorformlinge für die nachfolgenden Behandlungsschritte, wie beispielsweise für einen Blasformvorgang, ausgenutzt werden kann.

In einer Ausführungsform kann der erste Betrieb eine Ausbringleistung der Herstellungsmaschine, einen ersten Betriebsparameter der Herstellungsmaschine, welcher Einfluss auf eine Eigenschaft eines durch die Herstellungsmaschine hergestellten Vorformlings nehmen kann und/oder eine Eigenschaft eines durch die Herstellungsmaschine hergestellten Vorformlings umfassen und der zweite Betrieb eine Durchsatzleistung der wenigstens einen Behälterbehandlungsmaschine und/oder einen zweiten Betriebsparameter der wenigstens einen Behälterbehandlungsmaschine, welcher Einfluss auf eine Eigenschaft eines durch die wenigstens eine Behälterbehandlungsmaschine behandelten Vorformlings und/oder Behälters nehmen kann umfassen. Da die Ausbringleistung, die Durchsatzleistung, der erste und zweite Betriebsparameter, sowie die angegebenen materialspezifischen Parameter relativ einfach bestimmt und geregelt werden können, sind diese Größen besonders geeignet, um eine Abstimmung desersten und zweiten Betrieb der Herstellungsmaschine und der wenigstens einen Behälterbehandlungsmaschine zu erreichen.

In einer Ausführungsform wird der zweite Betrieb der wenigstens einen Behälterbehandlungsmaschine basierend auf dem ersten Betrieb der Herstellungsmaschine geregelt. Dies kann insbesondere vorgesehen sein, wenn der erste Betrieb der Herstellungsmaschine schwieriger beziehungsweise weniger flexibel einstellbar ist als der zweite Betrieb oder die Herstellungsmaschine als Leitmaschine der Behälterbehandlungsanlage dienen soll.

In einer Weiterbildung dieser Ausführungsform wird der erste Betrieb basierend auf einer Zykluszeit, einer Anzahl von Kavitäten eines Herstellungswerkzeugs der Herstellungsmaschine, einer Vorformlingstemperatur, einem Infrarot-Kennwert eines Vorformlings, einer intrinsischen Viskosität eines Vorformlings und/oder einer Farbe eines Vorformlings bestimmt. Da die ersten beiden Größen in direkter Verbindung mit der Ausbringleistung der Herstellungsmaschine stehen, kann die Ausbringleistung mittels dieser Parameter auf einfache und präzise Weise bestimmt werden. Die materialspezifischen Parameter können wiederum Einfluss auf die an den Vorformlingen und/oder Behältern mittels der wenigstens einen Behälterbehandlungsmaschine durchgeführten Behandlungsschritten nehmen und sind somit zur Abstimmung des ersten und zweiten Betriebs geeignet.

In einer Ausführungsform umfasst die Herstellungsmaschine eine Inspektionsmaschine zum Erkennen und zum Aussortieren fehlerhafter Vorformlinge und der erste oder der zweite Betrieb wird basierend auf einer Anzahl aussortierter Vorformlinge angepasst. Somit kann auch ein synchronisierter erster und zweiter Betrieb bei Aussortierung fehlerhafter Vorformlinge und einem damit einhergehenden zeitlich veränderlichen ersten Betrieb, beziehungsweise einer zeitlich veränderlichen ersten Ausbringleistung, sichergestellt werden.

In einer Ausführungsform wird der erste Betrieb der Herstellungsmaschine basierend auf dem zweiten Betrieb der wenigstens einen Behälterbehandlungsmaschine geregelt. Dies kann insbesondere vorteilhaft sein, wenn der zweite Betrieb der Behälterbehandlungsmaschine nur schwierig regelbar ist oder die wenigstens eine Behälterbehandlungsmaschine als Leitmaschine dienen soll. Somit kann auch in diesem Fall ein synchroner Betrieb zwischen Herstellungsmaschine und der wenigstens einen Behälterbehandlungsmaschine sichergestellt werden.

In einer Weiterbildung dieser Ausführungsform umfasst die wenigstens eine Behälterbehandlungsmaschine eine Transportkomponente und der zweite Betrieb wird basierend auf einer Aufnahmekapazität der Transportkomponente und/oder einer Behälterdurchsatzleistung der Transportkomponente bestimmt und/oder der erste Betrieb wird basierend auf einer Zykluszeit, einer Lock to Lock Zeit, einer Einspritzdauer, eines Trocknungsparameters, einer Herstellungswerkzeugtemperatur, einer Anzahl der Herstellungsmaschine zugeordneten Nachkühleinheiten und/oder einer Nachkühldauer geregelt. Da die eben genannten Größen in direkter Verbindung zum ersten beziehungsweise zweiten Betrieb stehen, kann eine einfache und präzise Bestimmung beziehungsweise eine einfache und präzise Regelung des ersten beziehungsweise zweiten Betriebs mittels der Bestimmung beziehungsweise Regelung dieser Größen erreicht werden.

### Kurze Beschreibung der Figuren

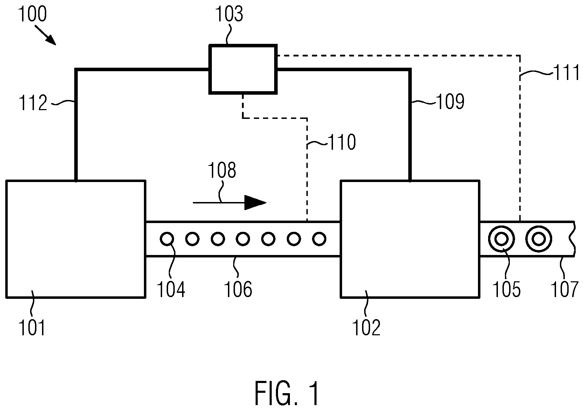

- Figur 1:: Behälterbehandlungsanlage umfassend eine Herstellungsmaschine und wenigstens eine Behälterbehandlungsmaschine gemäß einer Ausführungsform

### Ausführliche Beschreibung der Figuren

Figur 1 zeigt eine Behälterbehandlungsanlage 100 gemäß einer Ausführungsform, welche erfindungsgemäß eine Herstellungsmaschine 101 und wenigstens eine in einer Transportrichtung 108 der Vorformlinge stromab der Herstellungsmaschine 101 angeordnete Behälterbehandlungsmaschine 102 umfasst, wobei die Herstellungsmaschine 101 und die Behälterbehandlungsmaschine 102 miteinander verblockt sind und somit eine Einheit formen. Erfindungsgemäß umfasst die Behälterbehandlungsanlage 100 außerdem eine Steuereinheit 103, welche ausgebildet ist, einen ersten Betrieb der Herstellungsmaschine 101 und einen zweiten Betrieb der wenigstens einen Behälterbehandlungsmaschine 102 zu synchronisieren.

Die Herstellungsmaschine 101 kann zum Herstellen von Vorformlingen 104 ausgebildet sein. Insbesondere kann die Herstellungsmaschine 101 zum Verarbeiten von Kunststoffen jeglicher Art eingerichtet sein. Vorzugsweise handelt es sich hierbei jedoch um Kunststoffe, welche sich zum Herstellen eines Vorformlings 104 eignen. Beispielsweise kann die Herstellungsmaschine zum Verarbeiten von Polyethylenterephthalat (PET) beziehungsweise zur Herstellung von Vorformlingen 104 aus PET ausgestaltet sein. Alternativ kann die Herstellungsmaschine 101 beispielsweise auch zur Verarbeitung von Polyethylen (PE) oder Polypropylen (PP) und zur Herstellung von Vorformlingen 104 aus PE oder PP ausgebildet sein. Diese Beispiele sind allerdings nicht als beschränkend zu verstehen, so dass auch jeder andere geeignete Kunststoff durch die Herstellungsmaschine 101 zu einem Vorformling 104 verarbeitet werden kann.

Bei der Herstellungsmaschine kann es sich insbesondere um eine Spritzgussmaschine handeln. Alternativ kann es sich auch um eine Vorrichtung zur Herstellung von Vorformlingen mittels eines Compression Moulding Verfahrens oder um eine Vorrichtung zum Herstellen von Vorformlingen mittels eines Injection compression moulding Verfahrens handeln. Es kann sich jedoch auch um jede andere Vorrichtung handeln, welche zum Herstellen eines Vorformlings geeignet ist. Die Herstellungsmaschine 101 kann ein Herstellungswerkzeug umfassen. Das Herstellungswerkzeug kann wiederum eine Kavität beziehungsweise einen Hohlraum umfassen, wobei die Kavität beziehungsweise der Hohlraum einen Negativabdruck des Vorformlings 104 darstellen kann, welcher mittels der Herstellungsmaschine 101 hergestellt werden soll. Das Herstellungswerkzeug kann beispielsweise auch eine Vielzahl von Kavitäten umfassen, beispielsweise zwei, fünf oder zehn Kavitäten. Somit können mit dem Herstellungswerkzeug in einem Prozessschritt mehrere Vorformlinge 104 gleichzeitig hergestellt werden, wodurch die Ausbringleistung der Herstellungsmaschine 101 erhöht werden kann. Die Herstellungsmaschine 101 kann zudem eine Vielzahl von Nachkühleinheiten umfassen, um die mittels des Herstellungswerkzeugs hergestellten Vorformlinge 104 auf eine bestimmte Temperatur abzukühlen.

Optional kann die Herstellungsmaschine 101 ein Magazin für eine Vielzahl verschiedener Herstellungswerkzeuge umfassen, wobei die verschiedenen Herstellungswerkzeuge verschieden geformte Kavitäten beziehungsweise Hohlräume umfassen, so dass je nach Bedarf mit der Herstellungsmaschine 101 Vorformlinge 104 verschiedener Art hergestellt werden können.

In einer Ausführungsform können die Vorformlinge durch die Herstellungsmaschine geordnet bereitgestellt werden.

In der im Zusammenhang mit der Figur 1 diskutierten Ausführungsform ist die wenigstens eine Behälterbehandlungsmaschine 102 als Blasformmaschine 102 ausgestaltet. Bei der Blasformmaschine kann es sich beispielsweise um eine Streckblasformmaschine oder einer Extrusionsblasformmaschine handeln. Die Teilschritte des Umformungsvorgangs (Recken, Blasen) können unabhängig von dem geometrischen Ort der Vorformlinge durchgeführt werden.

Die Blasformmaschine 102 kann ausgestaltet sein, den durch die Herstellungsmaschine 101 bereitgestellten Vorformling 104 zu einem Behälter 105 jeglicher Art auszuformen. In einer bevorzugten Ausführungsform handelt es sich bei dem Behälter 105 um eine in der Getränkeindustrie verwendete Flasche. Diese Ausgestaltungsart des durch die Blasformmaschine erzeugten Behälters 105 ist allerdings als nicht beschränkend zu verstehen. Alternativ kann die Blasformmaschine 102 beispielsweise auch ausgebildet sein, den Vorformling 104 beispielsweise zu einer Dose, einem Glas, einem Becher oder einer Tube auszuformen, wie sie beispielsweise in der Getränke-, Pharma-, Gesundheits- oder Lebensmittelindustrie zum Einsatz kommen, oder zu jedem anderen Behälter, welcher zum Aufnehmen eines beliebigen flüssigen oder pastösen Mediums geeignet sein kann.

Die eben diskutierte Ausgestaltungsart der wenigstens einen Behälterbehandlungsmaschine 102 als Blasformmaschine 102 ist als beispielhaft zu verstehen. Die wenigstens eine Behälterbehandlungsmaschine 102 kann auch als jede andere Art von Behälterbehandlungsmaschine ausgeführt sein kann, welche zur Herstellung eines Behälters aus einem Vorformling und/oder zum Behandeln eines Behälters ausgebildet ist. Beispielsweise kann es sich bei der Behälterbehandlungsmaschine auch um eine Maschine zur Vorbehandlung von Behältern, beispielsweise mit einem Flammenpyrolyse-, einem Plasma-, oder einem Coronaverfahren, einen Füller, eine Etikettiervorrichtung, eine Direktdruckvorrichtung und/oder einen Verschließer handeln. Die eben diskutierten möglichen Ausgestaltungsarten der wenigstens einen Behälterbehandlungsmaschine sind als beispielhaft und nicht beschränkend zu verstehen.

In einer Ausführungsform kann es auch vorgesehen sein, dass mehr als eine Behälterbehandlungsmaschine 102 stromab der Herstellungsmaschine 101 in Transportrichtung 108 der Vorformlinge 104 angeordnet ist. So kann beispielsweise stromab der Herstellungsmaschine 101 in Transportrichtung 108 eine Blasformmaschine, stromab der Blasformmaschine in Transportrichtung 108 ein Füller, stromab des Füllers in Transportrichtung 108 ein Verschließer und wiederum stromab des Verschließers eine Etikettiermaschine angeordnet sein. Es ist jedoch auch jede andere Kombination beziehungsweise jede andere Anzahl von stromab der Herstellungsmaschine angeordneter Behälterbehandlungsmaschinen denkbar.

Erfindungsgemäß ist vorgesehen, dass die Herstellungsmaschine 101 und die wenigstens eine Behälterbehandlungsmaschine 102, beziehungsweise die im Zusammenhang mit der Figur 1 diskutierte Blasformmaschine 102, miteinander verblockt sind. Unter einer Verblockung ist hierbei insbesondere zu verstehen, dass die Herstellungsmaschine 101 und die wenigstens eine Behälterbehandlungsmaschine 102 eine Einheit bilden und derart miteinander in Verbindung stehen, dass die mittels der Herstellungsmaschine 101 hergestellten Vorformlinge 104 zur Weiterverarbeitung an die wenigstens eine Behälterbehandlungsmaschine 102 übergeben werden können. In der Figur 1 werden die in der Herstellungsmaschine 101 hergestellten Vorformlinge 104 der Blasformmaschine 102 übergeben, wo sie zu Behältern 105 ausgeformt werden.

Optional kann zum Übergeben der Vorformlinge an die Blasformmaschine 102 zwischen der Herstellungsmaschine 101 und Blasformmaschine eine erste Transportvorrichtung 106 vorgesehen sein.

Ebenfalls optional kann eine zweite Transportvorrichtung 107 stromab der Blasformmaschine 102 vorgesehen sein, mittels welcher die durch die Blasformmaschine 102 ausgeformten Behälter 105 von der Blasformmaschine 102 wegtransportiert beziehungsweise einer weiteren stromab der Blasformmaschine in Transportrichtung 108 angeordneten Behälterbehandlungsmaschine, welche in der Figur 1 jedoch nicht eingezeichnet ist, übergeben werden können. In einer alternativen Ausführungsform, wie weiter oben bereits ausführlich beschrieben, kann es vorgesehen sein, dass beispielsweise stromab der Blasformmaschine 102 eine weitere Behälterbehandlungsmaschine zur Vorbehandlung, zum Befüllen, zum Etikettieren, zum Bedrucken und/oder zum Verschließen der Behälter 105 vorgesehen ist.

In der im Zusammenhang mit der Figur 1 beschriebenen Ausführungsform sind die optionalen Transportvorrichtungen 106 und 107 als lineare Transportvorrichtungen ausgestaltet. Diese Ausgestaltungsart ist als beispielhaft und nicht beschränkend zu verstehen.

Alternativ kann es auch vorgesehen sein, dass die optionale erste 106 und die optionale zweite Transportvorrichtung 107 als Drehstern ausgestaltet ist. In diesem Fall kann beispielsweise auch die wenigstens eine Behälterbehandlungsmaschine 102, welche hier als Blasformmaschine 102 ausgestaltet ist, als Rundläufermaschine ausgestaltet sein. Im Falle der Blasformmaschine 102 kann diese bei Ausgestaltung als Rundläufermaschine eine Vielzahl von Blasformen zur Aufnahme von Vorformlingen umfassen, wobei die Blasformen entlang des Umfangs der Rundläufermaschine angeordnet sein können. Jeder der Blasformen kann in diesem Fall eine Blaseinheit zugeordnet sein, mittels welcher ein Vorformling in einer Blasform durch das Beaufschlagen mit Druckluft zu einem Behälter 105 ausgeformt werden kann.

Die Steuereinheit 103 ist erfindungsgemäß ausgebildet, den ersten Betrieb der Herstellungsmaschine 101 und den zweiten Betrieb der wenigstens einen Behälterbehandlungsmaschine 102, beziehungsweise der im Zusammenhang mit der Figur 1 diskutierten Blasformmaschine 102, zu synchronisieren.

Bei dem ersten Betrieb kann es sich insbesondere um eine Anzahl von Vorformlingen 104 handeln, welche pro Zeitintervall, beispielsweise pro Stunde, mittels der Herstellungsmaschine 101 hergestellt werden kann oder um eine Anzahl von Vorformlingen 104, welche pro Zeitintervall, beispielsweise pro Stunde, an die in Transportrichtung 108 stromab angeordnete Behälterbehandlungsmaschine 102 ausgegeben werden kann. Die Anzahl der Vorformlinge 104, welche durch die Herstellungsmaschine 101 pro Zeitintervall hergestellt werden kann und die Anzahl der Vorformlinge 104, welche pro Zeitintervall durch die Herstellungsmaschine 101 ausgebracht werden kann, kann beispielsweise verschieden sein, wenn die Herstellungsmaschine 101 eine optionale Inspektion der Vorformlinge vornimmt und ausgebildet ist, fehlerhafte Vorformlinge auszuführen, so dass nur fehlerfreie Vorformlinge an die wenigstens eine Behälterbehandlungsmaschine 102, beziehungsweise die Blasformmaschine 102, ausgebracht werden. Alternativ kann es sich bei dem ersten Betrieb beispielsweise auch um einen Abstand zwischen zwei Vorformlingen handeln, mit welchem die Vorformlinge durch die Herstellungsmaschine 101 ausgegeben werden. Der erste Betrieb kann beispielsweise mittels eines ersten Betriebsparameters, wie beispielsweise einer Zyklus- oder eine Einspritzdauer oder einer Nachkühlzeit, geregelt werden.

Bei dem ersten Betrieb kann es sich jedoch auch um einen Betrieb der Herstellungsmaschine 101 handeln, welcher nicht in direktem Zusammenhang mit der pro Zeitintervall durch die Herstellungsmaschine 101 hergestellten Vorformlinge steht. In diesem Fall kann es sich bei dem ersten Betriebsparameter auch um einen Betriebsparameter handeln, welcher eine beliebige Komponente der Herstellungsmaschine parametrisieren kann und den Vorformlingsdurchsatz durch die Herstellungsmaschine nicht zwangsläufig beeinflussen muss. In diesem Fall kann es sich bei dem ersten Betriebsparameter beispielsweise um eine Werkzeugtemperatur eines Herstellungswerkzeugs der Herstellungsmaschine handeln. Der erste Betriebsparameter kann auch einen Verschleißzustand der Herstellungsmaschine und/oder einer Komponente der Herstellungsmaschine angeben.

Weiterhin kann es sich bei dem ersten Betriebsparameter auch um einen materialspezifischen Parameter eines durch die Herstellungsmaschine 101 verarbeiteten Materials, wie beispielsweise eines Granulats oder einer Schmelze, oder eines durch die Herstellungsmaschine 101 hergestellten Vorformlings handeln. Bei dem materialspezifischen Parameter kann es sich beispielsweise um eine Vorformlingstemperatur, einen Infrarot-Kennwert des Vorformlings, einen intrinsischen Viskositätswert des Vorformlings, eine Farbe des Vorformlings oder jede andere Materialeigenschaft des durch die Herstellungsmaschine hergestellten Vorformlings handeln. Die materialspezifischen Parameter können beispielsweise durch wenigstens eine optionale Sensoreinrichtung messtechnisch erfasst werden. Die optionale Sensoreinrichtung kann beispielsweise also von der Herstellungsmaschine separate Vorrichtung ausgestaltet sein oder von der Herstellungsmaschine 101 umfasst sein.

Der erste Betrieb kann beispielsweise durch wenigstens einen ersten Betriebsparameter beschrieben sein.

Es kann außerdem vorgesehen sein, dass der erste Betrieb eine Vielzahl von ersten Betriebsparametern der Herstellungsmaschine umfassen kann, welche zum Teil mit der Anzahl der von Herstellungsmaschine pro Zeitintervall hergestellten Vorformlinge in Verbindung stehen können und zum Teil auch nicht mit der Anzahl der pro Zeitintervall hergestellten Vorformlinge in Verbindung stehen können.

Bei dem zweiten Betrieb kann es sich insbesondere um einen mittels der Behälterbehandlungsmaschine 102 erzielbaren Durchsatz an Vorformlingen beziehungsweise Behältern pro Zeitintervall, beispielsweise pro Stunde, oder eine Anzahl von Behälter, welche pro Zeitintervall durch die Behälterbehandlungsmaschine 102 verarbeitet werden kann handeln. Der zweite Betrieb kann beispielsweise mittels eines zweiten Betriebsparameters der Behälterbehandlungsmaschine geregelt werden. Im Falle einer Blasformmaschine kann es sich bei dem zweiten Betriebsparameter beispielsweise um eine Vorheizdauer des Vorformlings 104 vor Durchführung des Blasvorgangs oder um eine Blaszeit handeln.

Bei dem zweiten Betrieb kann es sich jedoch auch um einen Betrieb der wenigstens einen Behälterbehandlungsmaschine handeln, welcher nicht in direktem Zusammenhang mit dem durch die Behälterbehandlungsmaschine erzielbaren Durchsatz an Vorformlingen beziehungsweise Behältern steht. Beispielsweise kann es sich bei dem zweiten Betrieb auch um eine Parametrisierung einer durch die Behälterbehandlungsmaschine an den Vorformlingen oder Behältern durchgeführten Behandlungsschrittes handeln, welcher zu einer Veränderung einer Materialeigenschaft des Vorformlings oder des Behälters führt, jedoch nicht zwangsläufig Einfluss auf den durch die wenigstens eine Behälterbehandlungsmaschine erzielbaren Behälterdurchsatz nehmen muss. Handelt es sich bei der Behälterbehandlungsmaschine um eine Blasformmaschine kann es sich bei dem zweiten Betriebsparameter beispielsweise um ein Heizprofil der Blasformmaschine handeln.

Entsprechend dem ersten Betrieb kann auch der zweite Betrieb durch wenigstens einen zweiten Betriebsparameter beschrieben sein.

Es kann außerdem beispielsweise vorgesehen sein, dass der zweite Betrieb eine Vielzahl von zweiten Betriebsparametern der Behälterbehandlungsmaschine umfassen kann, welche zum Teil mit der Anzahl der von Behälterbehandlungsmaschine pro Zeitintervall behandelten Vorformlinge und/oder Behälter in Verbindung stehen können und zum Teil auch nicht mit der Anzahl der pro Zeitintervall behandelten Vorformlinge und/oder Behälter in Verbindung stehen können.

In einer Ausführungsform kann der der erste Betrieb eine Ausbringleistung der Herstellungsmaschine 101, einen ersten Betriebsparameter der Herstellungsmaschine, welcher Einfluss auf eine Eigenschaft eines durch die Herstellungsmaschine 101 hergestellten Vorformlings nehmen kann und/oder eine Eigenschaft eines durch die Herstellungsmaschine 101 hergestellten Vorformlings umfassen und der zweite Betrieb eine Durchsatzleistung der wenigstens einen Behälterbehandlungsmaschine 102 und/oder einen zweiten Betriebsparameter der wenigstens einen Behälterbehandlungsmaschine, welcher Einfluss auf eine Eigenschaft eines durch die wenigstens eine Behälterbehandlungsmaschine behandelten Vorformlings und/oder Behälters nehmen kann umfassen. Die Ausbringleistungen der Herstellungsmaschine 101 und die Durchsatzleistung der wenigstens einen Behälterbehandlungsmaschine 102 sind einfach bestimmbar und flexibel regelbar und deswegen besonders geeignet, um den ersten und den zweiten Betrieb der Herstellungsmaschine 101 und der wenigstens einen Behälterbehandlungsmaschine 102 zu synchronisieren.Unter einem Synchronisieren des ersten und zweiten Betriebs kann im Allgemeinen verstanden werden, dass der erste Betrieb und der zweite Betrieb aufeinander abgestimmt werden. Beispielsweise kann ein erster Betriebsparameter der Herstellungsmaschine und ein zweiter Betriebsparameter der wenigstens einen Behälterbehandlungsmaschine aufeinander abgestimmt sein. Hierunter kann beispielsweise verstanden werden, dass der erste Betriebsparameter basierend auf dem zweiten Betriebsparameter oder der zweite Betriebsparameter basierend auf dem ersten zweiten Betriebsparameter geregelt wird.

Mit Synchronisieren des ersten und des zweiten Betriebs kann in einer spezifischeren Ausführungsform beispielsweise gemeint sein, dass der erste Betrieb der Herstellungsmaschine 101 und der zweite Betrieb der Behälterbehandlungsmaschine 102 aufeinander abgestimmt sind, so dass die mit der Herstellungsmaschine 101 erzeugten Vorformlinge geordnet an die in Transportrichtung 108 der Vorformlinge stromab angeordnete Behälterbehandlungsmaschine übergeben und dort direkt weiterverarbeitet werden können, ohne dass eine Zwischenspeicherung der durch die Herstellungsmaschine erzeugten Vorformlinge in einer Zwischenpuffereinheit nötig ist. Da die Vorformlinge in einer Zwischenpuffereinheit typischerweise als Schüttgut gelagert werden und vor Zuführung an die wenigstens eine Behälterbehandlungsmaschine 102 wieder vereinzelt werden müssen, kann durch die Synchronisierung des ersten und zweiten Betriebs die Behälterbehandlungsanlage 100 nicht nur effizienter betrieben werden, sondern auch potentielle Beschädigungen der Vorformlinge 104 durch die Zwischenspeicherung vermieden werden. Optional kann eine solche Zwischenpuffereinrichtung dennoch vorgesehen sein.

Weiterhin kann es beispielsweise auch vorgesehen sein, dass der zweite Betrieb, wie beispielsweise ein Heizprofil einer Blasformmaschine, auch basierend auf einem materialspezifischen Parameter, wie beispielsweise einer Vorformlingstemperatur oder einem Infrarot-Kennwert, eines durch die Herstellungsmaschine hergestellten Vorformlings geregelt wird. Ferner kann es beispielsweise auch vorgesehen sein, dass ein erster Betrieb der Herstellungsmaschine, welcher Einfluss auf eine Eigenschaft eines durch die Herstellungsmaschine 101 hergestellten Vorformlings nehmen kann, wie beispielsweise eine Werkzeugkühlung eines Werkzeugs der Herstellungsmaschine 101, basierend auf einem zweiten Betrieb der wenigstens einen Behälterbehandlungsmaschine 102 zu regeln. Bei dem zweiten Betrieb kann es sich in diesem Fall beispielsweise um ein Heizprofil der in der Fig. 1 gezeigten Blasformmaschine oder jeden anderen zweiten Betriebsparameter handeln.

Die Steuereinheit 103 kann als Computer oder Rechensystem ausgestaltet sein und ausgebildet sein, den ersten Betrieb der Herstellungsmaschine 101 und den zweiten Betrieb der wenigstens eine Behälterbehandlungsmaschine 102 zu bestimmen und zu regeln. Hierfür kann die Steuereinheit 103 beispielsweise über eine erste Kabelverbindung 112 mit der Herstellungsmaschine 101 und über eine zweite Kabelverbindung 109 mit der wenigstens einen Behälterbehandlungsmaschine 102, beziehungsweise der Blasformmaschine 102, in Verbindung stehen, wobei die Steuereinheit 103 Daten an die Herstellungsmaschine 101 und die wenigstens eine Behälterbehandlungsmaschine 102 senden kann und auch Daten von den Maschinen empfangen kann. Alternativ kann es auch vorgesehen sein, dass die Steuereinheit 103 drahtlos, beispielsweise über eine WLAN-Verbindung, mit der Herstellungsmaschine 101 und der wenigstens einen Behälterbehandlungsmaschine 102 kommuniziert.

Die Steuereinheit 103 kann außerdem eine Speichereinheit umfassen. Auf der Speichereinheit kann eine Datenbank hinterlegt sein, welche eine Vielzahl von ersten Betriebsparametern für die Steuerung des ersten Betriebs der Herstellungsmaschine 101 und eine Vielzahl von zweiten Betriebsparametern für die Steuerung des zweiten Betriebs der wenigstens einen Behälterbehandlungsmaschine 102 umfassen kann. Insbesondere kann in der Datenbank wenigstens ein erster Betriebsparameterwert einem bestimmten ersten Betrieb der Herstellungsmaschine 101 zugeordnet sein und wenigstens ein zweiter Betriebsparameterwert einem bestimmten zweiten Betrieb der wenigstens einen Behälterbehandlungsmaschine 102 zugeordnet sein. Folglich kann die Steuereinheit 103 basierend auf den in der Datenbank hinterlegten Daten den wenigstens einen ersten Betriebsparameterwert, welcher zum Erreichen eines bestimmten ersten Betriebs der Herstellungsmaschine notwendig ist, abrufen und hierauf basierend den wenigstens einen Betriebsparameter der Herstellungsmaschine 101 einstellen, um einen bestimmten ersten Betrieb der Herstellungsmaschine 101 zu erreichen.

Das gleiche gilt analog für den wenigstens einen zweiten Betriebsparameterwert und den zweiten Betrieb der wenigstens einen Behälterbehandlungsmaschine 102. Außerdem kann in der Datenbank wenigstens einem ersten Betrieb der Herstellungsmaschine 101 ein entsprechender zweiter Betrieb der wenigstens einen Behälterbehandlungsmaschine zugeordnet sein und umgekehrt, wobei die Zuordnung so gewählt ist, dass der erste und der zweite Betrieb synchronisiert sind. Basierend auf den in der Datenbank hinterlegten Informationen kann die Steuereinheit 103 dann beispielsweise basierend auf einem ersten oder zweiten Betrieb, den anderen Betrieb derart regeln, dass der erste und der zweite Betrieb synchronisiert sind. Hierfür kann die Steuereinheit 103 beispielsweise den wenigstens einen Betriebsparameter des anderen Betriebs regeln und somit einen synchronen Betrieb erreichen. Das Regeln kann hierbei beispielsweise das Einstellen des ersten oder zweiten Betriebsparameters basierend auf dem aus der Datenbank erlangten ersten oder zweiten Betriebsparameterwert umfassen.

In einer alternativen Ausführungsform kann es beispielsweise auch vorgesehen sein, dass die Steuereinheit 103 mit dem Internet verbunden ist und auf einen externen Server zugreifen kann, wobei der Server eine Datenbank umfasst auf welcher eben beschriebene Informationen gespeichert sind.

In einer Ausführungsform kann die Steuereinheit 103 mit der ersten 106 und/oder der zweiten Transportvorrichtung 107 über Kabel- oder eine Drahtlosverbindungen 110, 111 verbunden sein und ausgebildet ist die erste 106 und/oder die zweite Transportvorrichtung 107 zu steuern. Beispielsweise kann die Steuereinheit 103 ausgebildet eine Transportgeschwindigkeit der ersten und/oder der zweiten Transportvorrichtung zu steuern. Im Falle einer Ausgestaltung der ersten 106 und/oder zweiten Transportvorrichtung 107 als Drehstern kann es auch vorgesehen sein, dass die Steuereinheit 103 ausgebildet ist, eine Drehgeschwindigkeit der ersten und/oder zweiten Transportvorrichtung zu steuern. In einer Ausführungsform kann es vorgesehen sein, dass die Steuereinheit zum Synchronisieren des ersten und des zweiten Betriebs zusätzlich die erste und/oder die zweite Transportvorrichtung steuert, was beispielsweise die Steuerung der Transportgeschwindigkeit und/oder der Drehgeschwindigkeit der ersten und/oder zweiten Transportvorrichtung umfassen kann.

In einer spezifischeren Ausführungsform kann es vorgesehen sein, dass die Steuereinheit 103 ausgebildet ist, den zweiten Betrieb der wenigstens einen Behälterbehandlungsmaschine 102 basierend auf dem ersten Betrieb der Herstellungsmaschine 101 zu regeln.

Dies kann insbesondere dann der Fall sein, wenn die Herstellungsmaschine 101 als Leitmaschine der Behälterbehandlungsanlage 100 vorgesehen ist. Alternativ kann dies beispielsweise auch der Fall sein, wenn eine durch die Herstellungsmaschine 101 maximal erzielbare Ausbringleistung, d.h. die Anzahl der Vorformlinge 104, die pro Zeitintervall, beispielsweise pro Stunde, maximal durch die Herstellungsmaschine 101 ausgebracht werden kann, kleiner ist eine maximale Anzahl von Vorformlingen 104, welche durch die in Transportrichtung 108 stromab angeordnete wenigstens eine Behälterbehandlungsmaschine 102, beziehungsweise die Blasformmaschine 102, in einem identischen Zeitintervall verarbeitet oder ausgegeben werden können.

Um den zweiten Betrieb der wenigstens einen Behälterbehandlungsmaschine 102 zu regeln, kann es in einer Ausführungsform vorgesehen sein, dass die Steuereinheit 103 zunächst den ersten Betrieb basierend auf einem ersten Betriebsparameter der Herstellungsmaschine 101 bestimmt. Handelt es sich bei dem ersten Betriebsparameter um einen materialspezifischen Parameter des Materials zum Herstellen des Vorformlings oder um einen materialspezifischen Parameter der hergestellten Vorformlinge, so kann dieser durch die weiter oben beschriebene optionale Sensoreinrichtung bestimmt werden.

Die Steuereinheit 103 kann den ersten Betrieb beispielsweise basierend auf einer Anzahl von Kavitäten des Herstellungswerkzeugs der Herstellungsmaschine oder einer Zykluszeit des Herstellungsprozesses bestimmen. Hierfür kann die Steuereinheit 103 beispielsweise auf die in der Speichereinheit hinterlegte Datenbank zugreifen, wo einem bestimmten Wert der Zykluszeit und/oder einer bestimmten Anzahl an Kavitäten des Herstellungswerkzeugs ein bestimmter erster Betrieb zugeordnet ist. Bei dem so bestimmten ersten Betrieb kann es sich beispielsweise um eine Ausbringleistung der Herstellungsmaschine handeln, welche beispielsweise einen Wert von 1.000 Vorformlingen pro Stunde, 5.000 Vorformlingen pro Stunde oder 20.0000 Vorformlingen pro Stunde annehmen kann. Basierend auf dem so bestimmten ersten Betrieb kann die Steuereinheit 103 dann basierend auf den in der Datenbank der Speichereinheit hinterlegten Daten einen Sollwert für einen zweiten Betrieb bestimmen und den zweiten Betrieb der Blasformmaschine, beziehungsweise allgemein der wenigstens einen Behälterbehandlungsmaschine 102, entsprechend regeln, so dass der erste und der zweite Betrieb synchronisiert sind. Entsprechend kann auch für jeden anderen ersten Betriebsparameter vorgegangen werden.

Das Regeln des zweiten Betriebs kann beispielsweise das Regeln wenigstens eines zweiten Betriebsparameters der Blasformmaschine 102, beziehungsweise der wenigstens einen Behälterbehandlungsmaschine 102, umfassen. Hierfür kann der wenigstens eine zweiten Betriebsparameter auf den mittels der Datenbank bestimmten Sollwert gesetzt werden. Alternativ kann es auch vorgesehen sein, dass die Regelung mittels eines Regelkreises durchgeführt wird.

Ferner kann es in einer Ausführungsform vorgesehen sein, dass die Herstellungsmaschine 101 eine Inspektionsmaschine umfasst, mittels welcher fehlerhafte Vorformlinge erkannt und aussortiert werden können. Hierfür kann die Inspektionsmaschine eine erste Erkennungseinrichtung umfassen, welche beispielsweise als wenigstens eine Kamera ausgestaltet sein kann. Mittels der Erkennungseinrichtung können beispielweise verkratze, verformte oder anderweitig beschädigte Vorformlinge direkt in der Herstellungsmaschine 101 erkannt und aussortiert werden. Somit kann sichergestellt werden, dass der stromab in Transportrichtung angeordneten wenigstens einen Behälterbehandlungsmaschine 102, beziehungsweise der Blasformmaschine, nur fehlerfreie Vorformlinge 104 zugeführt werden und somit die Qualität der mittels der wenigstens einen Behälterbehandlungsmaschine 102 behandelten Behälter, beziehungsweise der mittels der Blasformmaschine 102 hergestellten Behälter, erhöht werden kann.

Da in der eben diskutierten Ausführungsform die Ausbringleistung der Herstellungsmaschine 101, welche der Anzahl von in einem bestimmten Zeitintervall ausgegebener fehlerfreier Vorformlinge entspricht, geringer sein kann, als die Anzahl der durch die Herstellungsmaschine 101 bei einem bestimmten Betriebsparameter hergestellten Vorformlinge, welche beispielsweise wie oben beschrieben, anhand des wenigstens einen Betriebsparameters und/oder einer Eigenschaft der Herstellungsmaschine, wie der Anzahl der Kavitäten des Herstellungswerkzeugs, bestimmt werden kann, kann es in dieser Ausführungsform vorgesehen sein, dass die Anzahl fehlerhafter beziehungsweise aussortierter Vorformlinge bei der Bestimmung des ersten Betriebs berücksichtigt wird.

So können in einer Ausführungsform durch die Herstellungsmaschine eine Anzahl von N Vorformlingen pro Zeiteinheit hergestellt werden. Pro Zeiteinheit kann durch die Herstellungsmaschine im Mittel eine Anzahl von M fehlerhaften Vorformlingen aussortiert werden (etwa abhängig von einem Inspektionsergebnis, wie oben beschrieben), so dass durch die Herstellungsmaschine effektiv eine Anzahl von N - M Vorformlingen pro Zeiteinheit ausgegeben werden kann. N und M stellen dabei natürliche Zahlen dar. Die Steuereinheit kann dann ausgebildet sein, basierend auf der pro Zeiteinheit ausgegebenen Anzahl N - M an Vorformlingen den ersten Betrieb der Herstellungsmaschine 101 zu bestimmen. Basierend auf dem so bestimmten ersten Betrieb kann die Steuereinheit 103 dann den zweiten Betrieb der wenigstens einen Behälterbehandlungsmaschine 102 regeln, so dass der erste und der zweite Betrieb miteinander synchronisiert sind.

In einer Ausführungsform kann es beispielsweise vorgesehen sein, dass die Herstellungsmaschine 101 ausgestaltet ist, eine Anzahl (N) von 2000 Vorformlingen pro Stunde herzustellen und dass pro Zeiteinheit durchschnittlich eine Anzahl (M) von 30 fehlerhafter Vorformlinge aussortiert wird. Effektiv werden durch die Herstellungsmaschine somit 1970 Vorformlinge pro Stunde ausgegeben. Basierend auf dieser Anzahl, also den 1970 Vorformlingen, die tatsächlich von der Herstellungsmaschine 101 an die nachgeordnete Behälterbehandlungsmaschine 102 ausgegeben werden, erfolgt dann die Regelung des Betriebs der nachgeordneten Behälterbehandlungsmaschine 102. Diese Ausführungsform ist insbesondere hinsichtlich der angegebenen Anzahl hergestellter und/oder aussortierter Vorformlinge nicht als beschränkend zu verstehen, sodass auch jede andere Anzahl Vorformlinge pro Zeiteinheit oder jede andere Anzahl aussortierter Vorformlinge und jedes beliebige andere Verhältnis aussortierter zu hergestellten Vorformlingen hier verwendet werden kann. In einer alternativen Ausführungsform kann es beispielsweise auch vorgesehen sein, dass eine Anzahl von 500, 1.000 oder 5.000 Vorformlingen pro Stunde durch die Herstellungsmaschine hergestellt werden und pro Stunde 5, 10 oder 40 fehlerhafte Vorformlinge aussortiert werden. N und M kann jedoch auch jeden anderen beliebigen Wert annehmen.

Zur Bestimmung des ersten Betriebs kann es in einer Ausführungsform auch vorgesehen sein, dass eine zweite Erkennungseinrichtung an einem Auslauf der Herstellungsmaschine 101, durch welchen die fehlerfreien Vorformlinge der in Transportrichtung stromab angeordneten wenigstens einen Behälterbehandlungsmaschine 102 bereitgestellt werden, welche ebenfalls als wenigstens eine Kamera ausgestaltet sein kann, angeordnet ist und ausgebildet ist die Anzahl der tatsächlich in einem bestimmten Zeitintervall ausgebrachten Vorformlinge zu bestimmten. Alternativ kann es beispielsweise auch vorgesehen sein, dass die zweite Erkennungseinrichtung den Abstand zwischen zwei durch die Herstellungsmaschine 101 ausgegebenen Vorformlingen 104 bestimmt und der erste Betrieb der Herstellungsmaschine 101 basierend auf dem Abstand zweier ausgebrachter Vorformlinge 104 bestimmt wird. Wird beispielsweise ein fehlerhafter Vorformling durch die Inspektionsmaschine aussortiert, so wird der Abstand zwischen dem vor und nach dem fehlerhaften Vorformling hergestellten Vorformling doppelt so groß sein, wie der Abstand zweier direkt nacheinander produzierter fehlerfreier Vorformlinge. Hierauf basierend kann dann eine Regelung des zweiten Betriebs vorgenommen werden, so dass der erste Betrieb der Herstellungsmaschine 101 und der zweite Betrieb der Blasformmaschine 102, beziehungsweise der wenigstens einen Behälterbehandlungsmaschine, auch in diesem Fall synchronisiert sind.

In einer alternativen Ausführungsform kann es vorgesehen sein, dass der erste Betrieb der Herstellungsmaschine 101 basierend auf dem zweiten Betrieb der wenigstens einen Behälterbehandlungsmaschine 102 gesteuert wird. Dies kann dann der Fall sein, wenn die wenigstens eine Behälterbehandlungsmaschine 102 als Leitmaschine der Behälterbehandlungsanlage 100 vorgesehen ist. Alternativ kann dies beispielsweise auch vorgesehen sein, dass, wenn eine durch die wenigstens eine Behälterbehandlungsmaschine 102 maximal erzielbare Durchsatzleistung, d.h. wie viele Vorformlinge pro Zeitintervall, beispielsweise pro Stunde, maximal durch die Behälterbehandlungsmaschine 102 verarbeitet werden können, kleiner ist als eine maximale Anzahl von Vorformlingen, welche durch die in Transportrichtung stromauf angeordnete Herstellungsmaschine 101 in einem identischen Zeitintervall ausgegeben werden können. Dies kann jedoch auch dann vorgesehen sein, wenn ein materialspezifischer Parameter des Materials zur Herstellung der Vorformlinge, ein materialspezifischer Parameter der hergestellten Vorformlinge oder ein erster Betriebsparameter der Herstellungsmaschine 101, welcher Einfluss auf eine Eigenschaft eines mit der Herstellungsmaschine 101 hergestellten Vorformlings nehmen kann, auf den zweiten Betrieb der wenigstens einen Behälterbehandlungsmaschine 102 abgestimmt werden soll. Durch eine entsprechende Abstimmung des ersten und zweiten Betriebs kann beispielsweise die Qualität der hergestellten Behälter verbessert werden. In einer spezifischeren Ausführungsform kann es vorgesehen sein, dass die wenigstens eine Behälterbehandlungsmaschine 102 eine Transportkomponente umfasst und die Steuereinheit ausgebildet ist, den zweiten Betrieb basierend auf einer Aufnahmekapazität der Transportkomponente und/oder einem durch die Transportkomponente erzielbaren Behälterdurchsatz zu bestimmen. In einer Ausführungsform kann die Transportkomponente beispielsweise als lineare Transportkomponente, wie ein Transportband, ausgestaltet sein. In einer alternativen Ausführungsform kann die Transportkomponente als Drehstern oder als Sägezahnstern ausgeführt sein.

Im Fall einer linearen Transportkomponente kann die Aufnahmekapazität beispielsweise durch die Breite der linearen Transportkomponente, im Falle eines Drehsterns durch die Anzahl der Greifarme des Drehsterns und im Falle eines Sägezahnsterns durch die Anzahl der Taschen des Sägezahnsterns gegeben sein.

Der Behälterdurchsatz der linearen Transportkomponente kann ferner von einer Transportgeschwindigkeit, mit welcher die lineare Transportkomponente betrieben wird, abhängig sein. Im Falle des Drehsterns beziehungsweise des Sägezahnsterns kann der Behälterdurchsatz wiederum von einer Drehgeschwindigkeit des Drehsterns oder des Sägezahnsterns abhängen. Basierend auf dem so bestimmten zweiten Betrieb der wenigsten einen Behälterbehandlungsmaschine 102, beziehungsweise der Blasformmaschine 102, kann die Steuereinheit 103 dann ausgebildet sein, den ersten Betrieb der Herstellungsmaschine 101 derart zu regeln, so dass der erste und der zweite Betrieb synchronisiert sind. Wie bereits weiter oben im Zusammenhang der Regelung des zweiten Betriebs basierend auf dem ersten Betrieb beschrieben, kann die Steuereinheit 103 hierfür auf in der Speichereinheit hinterlegte Datenbank zugreifen. Hierauf basierend kann die Steuereinheit 103 dann beispielweise wenigstens einen ersten Betriebsparameter der Herstellungsmaschine 101 regeln, um den ersten und den zweiten Betrieb zu synchronisieren.

Das Regeln kann hierbei insbesondere umfassen, dass die Steuereinheit den wenigstens einen ersten Betriebsparameter auf einen anhand der Datenbank bestimmten Sollwert setzt. Die Regelung kann beispielsweise auch mittels eines Regelkreises ausgeführt werden.

In einer Ausführungsform kann das Regeln des ersten Betriebs beispielsweise das Regeln von wenigstens einem von einer Zykluszeit, einer Lock to Lock Zeit, einer Einspritzdauer, ein Trocknungsparameter, einer Herstellungswerkzeugtemperatur, einer Anzahl der Herstellungsmaschine zugeordneten Nachkühleinheiten und/oder und/oder einer Nachkühldauer umfassen. Mit Einspritzdauer ist die Zeitdauer gemeint, für welche ein Material, beispielsweise flüssiger Kunststoff, in eine Kavität des Herstellungswerkzeugs eingebracht wird. Unter Trocknungsparameter kann ein Betriebsparameter der Herstellungsmaschine verstanden werden, welcher Einfluss auf den Trocknungsvorgang des hergestellten Vorformlings nimmt. Unter der Herstellungswerkzeugtemperatur ist wiederum eine Temperatur des Herstellungswerkzeugs, bevor das Material in die Kavität des Herstellungswerkzeugs eingebracht wird, zu verstehen. Die Nachkühleinheiten können beispielsweise als Gebläse ausgestaltet sein und vorgesehen sein, den Vorformling, nachdem er aus dem Herstellungswerkzeug entfernt wurde, auf eine bestimmte Soll-Temperatur abzukühlen. Die Nachkühldauer beschreibt dagegen die Zeitdauer, für welche der Vorformling durch die Nachkühleinheiten abgekühlt wird. Unter Lock to Lock Zeit ist die Zeit zu verstehen, welche das Herstellungswerkzeug zum Öffnen und Schließen benötigt. In dieser Zeit kann keine Herstellung von Vorformlingen in der Herstellungsmaschine stattfinden, so dass die Lock to Lock Zeit einer Totzeit gleichgesetzt werden kann. Da diese Größen in direkter Verbindung mit dem ersten Betrieb stehen und einfach und präzise regelbar sind, sind sie zur Regelung des ersten Betriebs besonders geeignet.

In einer Ausführungsform kann es vorgesehen sein, dass im Falle eines Störfalls an einer Komponente der Behälterbehandlungsanlage, wie beispielsweise einer Behälterbehandlungsmaschine oder einer Transportvorrichtung, die Steuereinheit ausgebildet ist, den Störfall zu identifizieren und eine Geschwindigkeit der Komponenten der Behälterbehandlungsanlage, welche stromauf der Komponente angeordnet sind, die eine Störung aufweist, anzupassen. Im Falle eines Störfalls kann somit insbesondere die Ausstoßleistung der Komponenten angepasst werden und ein geregelter Weiterbetrieb der Behälterbehandlungsanlage ermöglicht werden. Bei dem Störfall kann es sich beispielsweise um einen Flaschenplatzer im Füller oder ein Überschäumen einer Flüssigkeit im Füller handeln. Es kann sich jedoch auch um jeden anderen Störfall an jeder anderen Komponente der Behälterbehandlungsanlage handeln.

Abhängig von der neu eingestellten Geschwindigkeit können dann die Betriebsparameter der jeweiligen Komponenten der Behälterbehandlungsanlage individuell angepasst werden. Beispielsweise kann es sich bei dem Betriebsparameter um eine Heizleistung, um einen Vorblaszeitpunkt, um einen Spritzparameter, um eine Pufferleistung, um eine Reckgeschwindigkeit usw. handeln.

Wie weiter oben bereits beschrieben, kann der erste Betrieb der Herstellungsmaschine auch ein materialspezifischer Parameter eines durch die Herstellungsmaschine hergestellten Vorformlings sein. In diesem Fall kann es beispielsweise vorgesehen sein, dass der zweite Betrieb basierend auf dem materialspezifischen Parameter des Vorformlings gesteuert wird. Durch Steuerung des zweiten Betriebs basierend auf dem materialspezifischen Parameter können die materialspezifischen Parameter bei der nachgeordneten Behandlung berücksichtigt werden und die Qualität der durch die wenigstens eine Behälterbehandlungsmaschine behandelten Vorformlinge auf diese Weise verbessert werden.

Wenn es sich bei dem materialspezifischen Parameter beispielsweise um eine Vorformlingstemperatur oder um einen Infrarot-Kennwert des Vorformlings handelt und es sich bei der wenigstens einen Behälterbehandlungsmaschine 102, wie im Zusammenhang mit der Fig. 1 beschrieben, um eine Blasformmaschine handelt, so kann es vorgesehen sein, dass ein Heizprofil oder auch jeder andere Maschinenparameter der Blasformmaschine basierend auf der Vorformlingstemperatur oder dem Infrarot-Kennwert gesteuert wird. Eine Steuerung kann auch basierend auf jedem anderen materialspezifischen Parameter des Vorformlings erfolgen.

Weiterhin kann auch es vorgesehen sein, dass ein erster Betrieb der Herstellungsmaschine 101, wie beispielsweise eine Werkzeugkühlung der Herstellungsmaschine 101, basierend auf einem zweiten Betrieb der wenigstens einen Behälterbehandlungsmaschine, wie der Blasformmaschine, gesteuert wird. Bei dem zweiten Betrieb kann es sich beispielsweise um einen Geschwindigkeitsregelung der wenigstens einen Behälterbehandlungsmaschine 102 oder jeden anderen zweiten Betriebsparameter der wenigstens einen Behälterbehandlungsmaschine handeln.

Im Allgemeinen kann es vorgesehen sein, dass jeder beliebige zweite Betrieb einer der Herstellungsmaschine nachgeordneten Behälterbehandlungsmaschine 102 mit dem ersten Betrieb der Herstellungsmaschine synchronisiert wird. Dies kann beispielsweise auch eine Abstimmung einer Granulat Trocknung in der Herstellungsmaschine mit dem zweiten Betrieb der nachgeordneten wenigstens einen Behälterbehandlungsmaschine, bis hin zur Synchronisierung eines zweiten Betriebs einer Etikettiermaschine oder Verpackungsmaschine mit dem ersten Betrieb der Herstellungsmaschine umfassen.

In einer Ausführungsform kann es vorgesehen sein, dass die angepassten Betriebsparameter durch ein neuronales Netz ermittelt werden. Bei dem neuronalen Netz kann es sich um ein trainiertes neuronales Netz handeln. Das neuronale Netz kann zur Ermittlung der angepassten Betriebsparameter beispielsweise auf einen Datensatz zugreifen, welcher lokal in der Steuereinheit oder auf einem externen Server, beispielsweise einer Cloud, hinterlegt sein kann.

Alternativ können die angepassten Betriebsparameter auch mittels eines deterministisch arbeitenden Algorithmus (etwa ein Programm mit festgelegten Variablen und Funktionen) ermittelt werden. Der deterministisch arbeitende Algorithmus kann lokal auf der Steuereinheit oder extern auf einem Server, beispielsweise einer Cloud, hinterlegt sein.

## Patentansprüche

1. Behälterbehandlungsanlage (100) umfassend eine Herstellungsmaschine (101) zum Herstellen eines Vorformlings (104), insbesondere eine Spritzgussmaschine, wenigstens eine in einer Transportrichtung (108) des Vorformlings (104) stromab der Herstellungsmaschine (101) angeordnete Behälterbehandlungsmaschine (102) und eine Steuereinheit (103), wobei die Herstellungsmaschine (101) und die wenigstens eine Behälterbehandlungsmaschine (102) miteinander verblockt sind, wobei die Steuereinheit (103) ausgebildet ist, einen ersten Betrieb der Herstellungsmaschine (101) und einen zweiten Betrieb der wenigstens einen Behälterbehandlungsmaschine (102) miteinander zu synchronisieren.

2. Behälterbehandlungsanlage nach Anspruch 1, wobei der erste Betrieb eine Ausbringleistung der Herstellungsmaschine (101), einen ersten Betriebsparameter der Herstellungsmaschine (101), welcher Einfluss auf eine Eigenschaft eines durch die Herstellungsmaschine (101) hergestellten Vorformlings nehmen kann und/oder eine Eigenschaft eines durch die Herstellungsmaschine (101) hergestellten Vorformlings umfasst und der zweite Betrieb eine Durchsatzleistung der wenigstens einen Behälterbehandlungsmaschine (102) und/oder einen zweiten Betriebsparameter der wenigstens einen Behälterbehandlungsmaschine, welcher Einfluss auf eine Eigenschaft eines durch die wenigstens eine Behälterbehandlungsmaschine (102) behandelten Vorformlings und/oder Behälters nehmen kann umfasst.

3. Behälterbehandlungsanlage nach Anspruch 1 oder 2, wobei die Steuereinheit (103) ausgebildet ist, den zweiten Betrieb der wenigstens einen Behälterbehandlungsmaschine (102) basierend auf dem ersten Betrieb der Herstellungsmaschine (101) zu regeln.

4. Behälterbehandlungsanlage nach Anspruch 3, wobei die Steuereinheit (103) ausgebildet ist, den ersten Betrieb basierend auf einer Zykluszeit, einer Anzahl von Kavitäten eines Herstellungswerkzeugs der Herstellungsmaschine (101), einer Vorformlingstemperatur, einem Infrarot-Kennwert eines Vorformlings, einer intrinsischen Viskosität eines Vorformlings und/oder einer Farbe eines Vorformlings zu bestimmen.

5. Behälterbehandlungsanlage nach einem der Ansprüche 1 bis 4, wobei die Herstellungsmaschine (101) eine Inspektionsmaschine zum Erkennen und zum Aussortieren fehlerhafter Vorformlinge umfasst und die Steuereinheit (103) ausgebildet ist, den ersten oder den zweiten Betrieb basierend auf einer Anzahl aussortierter Vorformlinge anzupassen.

6. Behälterbehandlungsanlage nach einem der Ansprüche 1 oder 2, wobei die Steuereinheit (103) ausgebildet ist, den ersten Betrieb der Herstellungsmaschine (101) basierend auf dem zweiten Betrieb der wenigstens einen Behälterbehandlungsmaschine (102) zu regeln.

7. Behälterbehandlungsanlage nach Anspruch 6, wobei die wenigstens eine Behälterbehandlungsmaschine (102) eine Transportkomponente umfasst und die Steuereinheit (103) ausgebildet ist, den zweiten Betrieb basierend auf einer Aufnahmekapazität der Transportkomponente und/oder einem durch die Transportkomponente erzielbaren Behälterdurchsatz zu bestimmen.

8. Behälterbehandlungsanlage nach Anspruch 6 oder 7, wobei das Regeln des ersten Betriebs der Herstellungsmaschine (101) das Regeln von wenigstens einer Zykluszeit, einer Lock to Lock Zeit, einer Einspritzdauer, eines Trocknungsparameters, einer Herstellungswerkerkzeugtemperatur, einer Anzahl der Herstellungsmaschine zugeordneten Nachkühleinheiten und/oder einer Nachkühldauer umfasst.

9. Verfahren zum Steuern eines Betriebs einer Behälterbehandlungsanlage (100), wobei die Behälterbehandlungsanlage (100) eine Herstellungsmaschine (101) zum Herstellen eines Vorformlings (104), insbesondere eine Spritzgussmaschine, wenigstens eine in einer Transportrichtung (108) des Vorformlings (104) stromab der Herstellungsmaschine (101) angeordnete Behälterbehandlungsmaschine (102) und eine Steuereinheit (103) umfasst, wobei die Herstellungsmaschine (101) und die wenigstens eine Behälterbehandlungsmaschine (102) miteinander verblockt sind, wobei mittels der Steuereinheit (103) ein erster Betrieb der Herstellungsmaschine (101) und ein zweiter Betrieb der wenigstens einen Behälterbehandlungsmaschine (102) miteinander synchronisiert wird.

10. Verfahren nach Anspruch 9, wobei der erste Betrieb eine Ausbringleistung der Herstellungsmaschine (101), einen ersten Betriebsparameter der Herstellungsmaschine, welcher Einfluss auf eine Eigenschaft eines durch die Herstellungsmaschine (101) hergestellten Vorformlings nehmen kann und/oder eine Eigenschaft eines durch die Herstellungsmaschine (101) hergestellten Vorformlings umfasst und der zweite Betrieb eine Durchsatzleistung der wenigstens einen Behälterbehandlungsmaschine (102) und/oder einen zweiten Betriebsparameter der wenigstens einen Behälterbehandlungsmaschine, welcher Einfluss auf eine Eigenschaft eines durch die wenigstens eine Behälterbehandlungsmaschine behandelten Vorformlings und/oder Behälters nehmen kann umfasst.

11. Verfahren nach einem der Ansprüche 9 oder 10, wobei der zweite Betrieb der wenigstens einen Behälterbehandlungsmaschine (102) basierend auf dem ersten Betrieb der Herstellungsmaschine (101) geregelt wird.

12. Verfahren nach Anspruch 11, wobei der erste Betrieb basierend auf einer Zykluszeit, einer Anzahl von Kavitäten eines Herstellungswerkzeugs der Herstellungsmaschine (101), einer Vorformlingstemperatur, einem Infrarot-Kennwert eines Vorformlings, einer intrinsischen Viskosität eines Vorformlings und/oder einer Farbe eines Vorformlings bestimmt wird.

13. Verfahren nach einem der Ansprüche 9 bis 12, wobei die Herstellungsmaschine (101) eine Inspektionsmaschine zum Erkennen und zum Aussortieren fehlerhafter Vorformlinge umfasst und der erste oder der zweite Betrieb basierend auf einer Anzahl aussortierter Vorformlinge angepasst wird.

14. Verfahren nach einem der Ansprüche 9 oder 10, wobei der erste Betrieb der Herstellungsmaschine (101) basierend auf dem zweiten Betrieb der wenigstens einen Behälterbehandlungsmaschine (102) geregelt wird.

15. Verfahren nach Anspruch 14, wobei die wenigstens eine Behälterbehandlungsmaschine (102) eine Transportkomponente umfasst und der zweite Betrieb basierend auf einer Aufnahmekapazität der Transportkomponente und/oder einem durch die Transportkomponente erzielbaren Behälterdurchsatz bestimmt und/oder der erste Betrieb basierend auf einer Zykluszeit, einer Lock to Lock Zeit, einer Einspritzdauer, eines Trocknungsparameters, einer Herstellungswerkzeugtemperatur, einer Anzahl der Herstellungsmaschine zugeordneten Nachkühleinheiten und/oder einer Nachkühldauer geregelt wird.
